# DEMANDE DE BREVET EUROPEEN

(11) **EP 2 422 626 A1**
(43) Date de publication de la demande: **29.02.2012**
(21) Numéro de dépôt: 11306016.4
(22) Date de dépôt: 05.08.2011
(51) Int. Cl.: A23C 9/12, A23C 9/123, A47J 27/00, A47J 27/62

(54) **Procédé et yaourtière domestique électrique pour obtenir des yaourts fermés**

(30) Priorité: 27.08.2010 FR 1056805
(71) Demandeur: Seb S.A., 69130 Ecully (FR)
(72) Inventeur: Charles, Patrick, 65290 LOUEY (FR); Astegno, Jean-Paul, 64420 ESPOEY (FR); Lacourpaille, Gérard, 65380 OSSUN (FR)
(74) Mandataire: Cémeli, Eric Philippe Laurent

(57) **Abrégé**

- L'invention concerne un procédé d'obtention de yaourt, consistant à placer dans une enceinte au moins un récipient contenant une préparation à base de lait et de ferments, à élever la température de la préparation au-dessus de 40°C par un apport thermique s'étendant sur une durée d'au moins 4 heures.
- Selon l'invention, la vitesse d'élévation de température de la préparation autour de 40°C est comprise entre 5 et 20°C/h, et de préférence entre 7 et 15°C/h.
- L'invention concerne également une yaourtière domestique électrique comportant une enceinte logeant un récipient, des moyens de chauffe aptes à porter la température de la préparation disposée dans ledit récipient au dessus de 40°C, ainsi que des moyens de pilotage autorisant une alimentation des moyens de chauffe s'étendant sur une durée d'au moins 4 heures, l'apport thermique des moyens de chauffe contrôlés par les moyens de pilotage présentant les caractéristiques précitées.

## Description

La présente invention concerne le domaine technique de la fabrication des yaourts.

La présente invention concerne plus particulièrement, mais non exclusivement, la fabrication des yaourts dans une yaourtière domestique électrique.

Les yaourtières domestiques électriques comportent usuellement une enceinte logeant un ou plusieurs récipients, ainsi que des moyens de chauffe aptes à porter la température de la préparation disposée dans le ou les récipients à l'intérieur d'un intervalle de température permettant la fabrication de yaourt, usuellement compris entre 40°C et 50°C.

Une première famille de yaourtières existantes repose sur le chauffage de la préparation en utilisant un composant chauffant agencé dans de la paraffine, tel que décrit dans le document FR 2 244 397. Dans ces appareils, la température de la préparation croît pendant un peu moins de 1h30 jusqu'à atteindre une valeur de température permettant la fabrication de yaourt. La température de la préparation plafonne ensuite, puis décroît, tout en restant dans la plage de température précitée pendant au moins 2h30. Un inconvénient de ces appareils réside dans l'apport thermique limité à la première partie de la durée nécessaire à la réalisation des yaourts. Si l'utilisateur attend trop pour ranger ses yaourts, la température de la préparation diminue en deçà de la plage de température de fabrication de yaourt, ce qui influe de manière défavorable sur la qualité gustative des yaourts. Par ailleurs, l'utilisation de ces appareils dans une pièce fraîche contribue à réduire plus fortement la température dans l'enceinte lors de la deuxième partie de la durée nécessaire à la réalisation des yaourts. Un autre inconvénient réside dans la fabrication peu aisée du dispositif de chauffe utilisant de la paraffine.

Une seconde famille de yaourtières existantes repose sur le chauffage de la préparation en utilisant un élément chauffant de faible puissance agencé dans l'air ou contre le fond d'une cuve, tel que décrit notamment dans le document FR 2 829 907. La montée en température de la préparation est beaucoup plus lente et peut s'étendre sur plus de six heures, en nécessitant trois à cinq heures pour atteindre une valeur de température permettant la fabrication de yaourt. Un inconvénient de ces appareils réside dans leur sensibilité à la température ambiante ainsi qu'à la température de la préparation utilisée. La très faible puissance de ces appareils peut en effet conduire à des températures de fonctionnement insuffisamment élevées favorisant l'obtention de yaourts peu fermes et peu onctueux. Notamment, les yaourts redeviennent très liquides après brassage.

Avec les appareils précités l'utilisateur n'est pas assuré d'obtenir des yaourts vraiment fermes à chaque réalisation.

Un objet de la présente invention est de proposer un procédé pour obtenir des yaourts fermes.

Un autre objet de la présente invention est de proposer une yaourtière électrique domestique permettant d'obtenir des yaourts fermes.

Ces objets sont atteints avec un procédé d'obtention de yaourt, consistant à placer dans une enceinte au moins un récipient contenant une préparation à base de lait et de ferments, à élever la température de la préparation au-dessus de 40°C par un apport thermique s'étendant sur une durée d'au moins 4 heures, du fait que la vitesse d'élévation de température de la préparation autour de 40°C est comprise entre 5 et 20°C/h, et de préférence entre 7 et 15°C/h. Des essais ont en effet montré que ces plages de vitesse de montée en température sont favorables à l'obtention de yaourts bien plus fermes que les yaourts obtenus avec les yaourtières électriques domestiques actuelles. Les yaourtières actuelles à paraffine présentent un apport thermique s'étendant sur une durée d'environ 1h30, puis les pertes thermiques l'emportent sur la chaleur restituée par la paraffine et la température de la préparation décroît ensuite, ce qui n'est pas favorable à l'obtention de l'effet recherché. Les yaourtières actuelles à sole chauffante présentent un apport thermique continu s'étendant sur toute la durée de fermentation, toutefois la vitesse de montée en température est plus faible que les plages de vitesse de montée en température précitées, ce qui n'est pas non plus favorable à l'obtention de l'effet recherché.

Avantageusement, l'apport thermique comporte au moins une phase initiale et une phase ultérieure, l'apport thermique étant plus important lors de la phase initiale que lors de la phase ultérieure. L'apport thermique lors de la phase ultérieure peut ainsi être calibré pour maintenir la température de la préparation à l'intérieur d'une plage de température bien adaptée à la fabrication de yaourt, par exemple entre 40°C et 50°C; l'apport thermique plus important lors de la phase initiale permet de réduire le temps nécessaire à l'atteinte de ladite plage de température dans la préparation, et donc d'obtenir une vitesse d'élévation de température plus importante qu'avec l'apport thermique plus réduit utilisé lors de la phase ultérieure. Ces dispositions contribuent aussi à l'obtention de yaourts fermes dans une ambiance froide et/ou en utilisant des ingrédients de départ froids.

Avantageusement alors, ledit procédé consiste à réaliser la phase initiale de l'apport thermique au moins jusqu'à l'atteinte d'une température de la préparation de 40°C. Cette disposition favorise la coagulation de la préparation.

Avantageusement encore, la phase ultérieure de l'apport thermique utilise des apports d'énergie séquentiels. Cette disposition permet de simplifier l'obtention de l'apport thermique.

Avantageusement encore, l'apport thermique est piloté par au moins une mesure de température. Cette disposition permet d'utiliser des puissances de chauffe nominales plus élevées. Cette disposition permet aussi de diminuer la sensibilité du procédé aux conditions de température initiale de la préparation ainsi qu'à la température ambiante.

Avantageusement encore, l'apport thermique est piloté par plusieurs mesures de température et la phase initiale présente une température de consigne initiale supérieure à une température de consigne ultérieure de la phase ultérieure. Ces dispositions permettent d'obtenir un procédé particulièrement performant du fait de vitesses d'élévation de température élevées et d'une moindre sensibilité aux conditions thermiques initiales de l'ambiance et/ou de la préparation.

Ces objets sont également atteints avec une yaourtière domestique électrique, comportant une enceinte logeant au moins un récipient prévu pour recevoir une préparation à base de lait et de ferments, des moyens de chauffe associés à l'enceinte, ainsi que des moyens de pilotage aptes à contrôler les moyens de chauffe, les moyens de chauffe étant aptes à porter la température de ladite préparation disposée dans ledit récipient au dessus de 40°C, les moyens de pilotage autorisant une alimentation des moyens de chauffe s'étendant sur une durée d'au moins 4 heures, dans laquelle l'apport thermique des moyens de chauffe contrôlés par les moyens de pilotage autorise une vitesse d'élévation de température de ladite préparation autour de 40°C qui soit comprise entre 5 et 20°C/h, et de préférence entre 7 et 15°C/h. Ces dispositions permettent de réaliser une yaourtière domestique électrique dans laquelle les yaourts obtenus sont bien plus fermes que les yaourts obtenus avec les yaourtières électriques domestiques actuelles.

Selon un mode de réalisation avantageux, l'enceinte comporte une base chauffante surmontée d'un couvercle principal. Cette disposition permet une construction simple ainsi qu'une manipulation aisée.

Selon une forme de réalisation, ledit récipient repose sur la base chauffante. Le récipient peut alors être chauffé principalement par conduction. Avantageusement alors, ledit récipient repose dans une conformation concave de la base chauffante. Cette disposition permet de faciliter le positionnement du récipient dans l'appareil. Une chauffe plus précise de la préparation peut ainsi être obtenue.

Selon une autre forme de réalisation ledit récipient est suspendu au dessus et à distance de la base chauffante. Le récipient peut alors être chauffé principalement par rayonnement.

Avantageusement alors, l'enceinte comporte un support de récipient intercalé entre la base chauffante et le couvercle principal.

Selon un mode de réalisation avantageux, ledit récipient est réalisé en verre. Cette disposition permet de favoriser les échanges thermiques.

Si désiré, la yaourtière domestique électrique peut comporter plusieurs récipients agencés dans l'enceinte.

Ces objets sont également atteints avec une yaourtière domestique électrique dans laquelle les moyens de pilotage sont aptes à la mise en oeuvre du procédé précité.

L'invention sera mieux comprise à l'étude de deux exemples de réalisation, pris à titre nullement limitatif, illustrés dans les figures annexées, dans lesquelles :
- la figure 1 est une vue en élévation et en coupe d'un premier exemple de réalisation d'une yaourtière domestique électrique selon l'invention.
- la figure 2 est une vue de dessus en perspective de la base chauffante de la yaourtière domestique électrique illustrée sur la figure 1,
- la figure 3 est une vue de dessous en perspective de la partie chauffante de la base chauffante illustrée sur la figure 2,
- la figure 4 est une représentation schématique de la température de la plaque de chauffe et de la température de la préparation lors d'un cycle de fabrication de yaourt utilisant la yaourtière domestique électrique illustrée sur la figure 1,
- la figure 5 est une vue en élévation et en coupe d'un deuxième exemple de réalisation d'une yaourtière domestique électrique selon l'invention.
- la figure 6 est une vue de dessus en perspective de la base chauffante de la yaourtière domestique électrique illustrée sur la figure 5,
- la figure 7 est une vue de dessous en perspective de la partie chauffante de la base chauffante illustrée sur la figure 6,
- la figure 8 est une représentation schématique de la température de la plaque de chauffe et de la température de la préparation lors d'un cycle de fabrication de yaourt utilisant la yaourtière domestique électrique illustrée sur la figure 5.

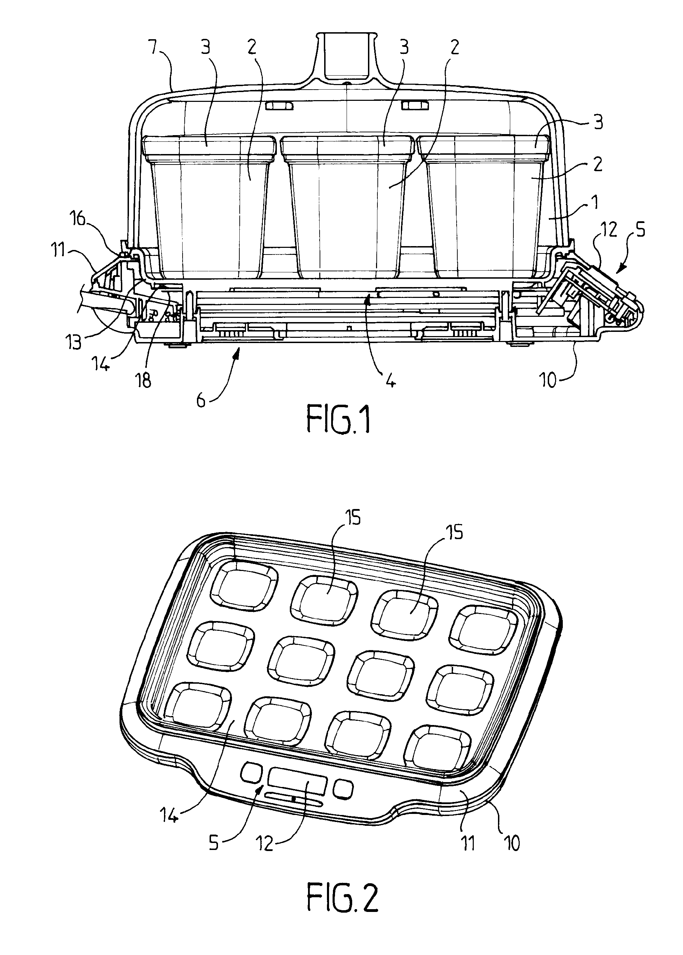

Un premier exemple de réalisation d'une yaourtière domestique électrique selon l'invention est illustré aux figures 1 à 3.

La figure 1 montre une yaourtière domestique électrique, comportant une enceinte 1 logeant au moins un récipient 2 prévu pour recevoir une préparation à base de lait et de ferments. L'enceinte 1 est prévue pour loger douze récipients 2. Les récipients 2 sont avantageusement réalisés en verre. Les récipients 2 peuvent être équipés de couvercles 3. Ces couvercles 3 sont utilisés uniquement pour la conservation des préparations culinaires après fermentation dans l'appareil selon l'invention. De même, les récipients 2 peuvent comprendre un réceptacle interne perforé pour la préparation de fromage blanc ou de faisselle.

La yaourtière domestique électrique illustrée sur la figure 1 comporte également des moyens de chauffe 4 associés à l'enceinte 1, ainsi que des moyens de pilotage 5 aptes à contrôler les moyens de chauffe 4. L'enceinte 1 comporte une base chauffante 6 surmontée d'un couvercle principal 7. Le couvercle principal 7 repose sur la base chauffante 6. Les moyens de chauffe 4 et les moyens de pilotage 5 sont agencés dans la base chauffante 6. Chaque récipient 2 repose sur la base chauffante 6.

Tel que représenté sur les figures 1 et 2, la base chauffante 6 comporte une embase 10, un capot annulaire externe 11 logeant un panneau de commande 12, et un capot annulaire interne 13 entourant une plaque de chauffe 14. La base chauffante 6 forme ainsi une sole chauffante. Tel que mieux visible sur la figure 2, la plaque de chauffe 14 présente plusieurs conformations concaves 15 prévues chacune pour recevoir un récipient 2. Ainsi chaque récipient 2 repose dans une conformation concave 15 de la base chauffante 6.

Le couvercle principal 7 repose sur un bord supérieur de la base chauffante 6 à distance de la plaque de chauffe 14. Tel que visible sur la figure 1, le couvercle principal 7 repose sur un épaulement 16 du capot annulaire interne 13.

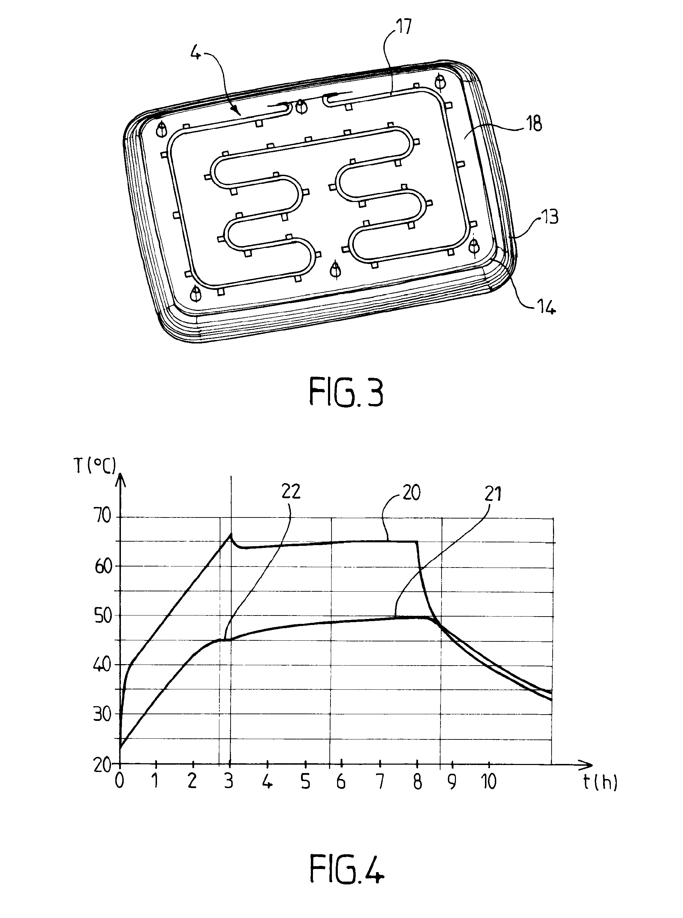

Tel que visible sur les figures 1 et 3, les moyens de chauffe 4 sont formés par un élément chauffant blindé 17 monté sur une plaque métallique 18 solidaire de la face inférieure de la plaque de chauffe 14. La plaque de chauffe 14 est par exemple réalisée en aluminium pour assurer une répartition homogène de la température sur toute la surface de la plaque de chauffe 14 et de préférence en aluminium moulé. La base chauffante 6 comprend ainsi des moyens de chauffage surfacique placés sous les récipients 2, permettant de réaliser une chauffe homogène sous les récipients 2.

Les moyens de pilotage 5 autorisent une alimentation des moyens de chauffe 4 s'étendant sur une durée d'au moins 4 heures. Les moyens de chauffe 4 ne sont pas nécessairement alimentés de manière continue. En d'autres termes, l'alimentation des moyens de chauffe 4 peut comprendre au moins une période de non alimentation entre deux périodes d'alimentation, la durée cumulée des périodes d'alimentation pouvant être inférieure à 4 heures, l'arrêt de l'alimentation des moyens de chauffe intervenant au moins 4 heures après le début de l'alimentation des moyens de chauffe 4.

Les moyens de pilotage 5 comportent un dispositif de commande associé à un relais prévu pour piloter l'alimentation des moyens de chauffe 4. La durée de fonctionnement est par exemple de 8 heures.

Dans une phase initiale de fonctionnement, le relais alimente les moyens de chauffe 4 sans interruption, c'est-à-dire de manière continue. La durée de la phase initiale de fonctionnement est par exemple de 3 heures. Dans une phase ultérieure de fonctionnement, le relais alimente les moyens de chauffe 4 de manière séquentielle en alternant des périodes d'alimentation et des périodes de non alimentation. Ainsi la puissance moyenne délivrée par les moyens de chauffe 4 lors de la phase initiale de fonctionnement est plus élevée que lors de la phase ultérieure de fonctionnement. De préférence, la durée des périodes d'alimentation et des périodes de non alimentation est comprise entre 15 s et 1 min. De préférence, la durée des périodes d'alimentation et des périodes de non alimentation est équivalente.

Les moyens de chauffe 4 sont aptes à porter la température de la préparation à base de lait et de ferments disposée dans les récipients 2 au dessus de 40°C. La puissance des moyens de chauffe 4 est choisie pour obtenir une température comprise entre 40°C et 50°C dans la préparation à base de lait et de ferments disposée dans les récipients 2, pendant une durée d'au moins 4 heures. La puissance des moyens de chauffe 4 est par exemple de 40W, ce qui correspond à une puissance plus de deux fois plus élevée que la puissance des yaourtières électriques domestiques à cuve chauffante connues. La figure 4 montre la température de la plaque de chauffe 14 sur la courbe 20 et la température dans la préparation sur la courbe 21.

Tel que bien visible sur la figure 4, la température de la préparation atteint 40°C après un peu moins de deux heures de fonctionnement des moyens de chauffe 4, et continue à s'élever ensuite.

L'apport thermique des moyens de chauffe 4 contrôlés par les moyens de pilotage 5 autorise une vitesse d'élévation de température de ladite préparation autour de 40°C qui soit comprise entre 5 et 20°C/h, et de préférence entre 7 et 15°C/h.

Tel que représenté sur la figure 4, la vitesse d'élévation de température de la préparation autour de 40°C est de l'ordre de 7,5°C/h. De plus, la courbe 21 présente une zone remarquable 22 autour de 45°C. La pente de la courbe 21 présente en effet une discontinuité avec une évolution de température quasi nulle. La zone remarquable 22 a été associé à un phénomène de coagulation dans la préparation. La zone remarquable 22 intervient dans la phase initiale de fonctionnement à pleine puissance.

De manière surprenante, il a été observé que les yaourts ainsi obtenus étaient plus fermes que les yaourts obtenus dans les yaourtères électriques domestiques précitées.

L'appareil selon le premier exemple de réalisation s'utilise et fonctionne de la manière suivante. L'utilisateur soulève le couvercle principal 7, dispose sur la base chauffante 6 un ou plusieurs récipients 2 contenant une préparation à base de lait et de ferments, remet en place le couvercle principal 7 sur la base chauffante 6 et actionne les moyens de pilotage 5 pour mettre en fonctionnement les moyens de chauffe 4.

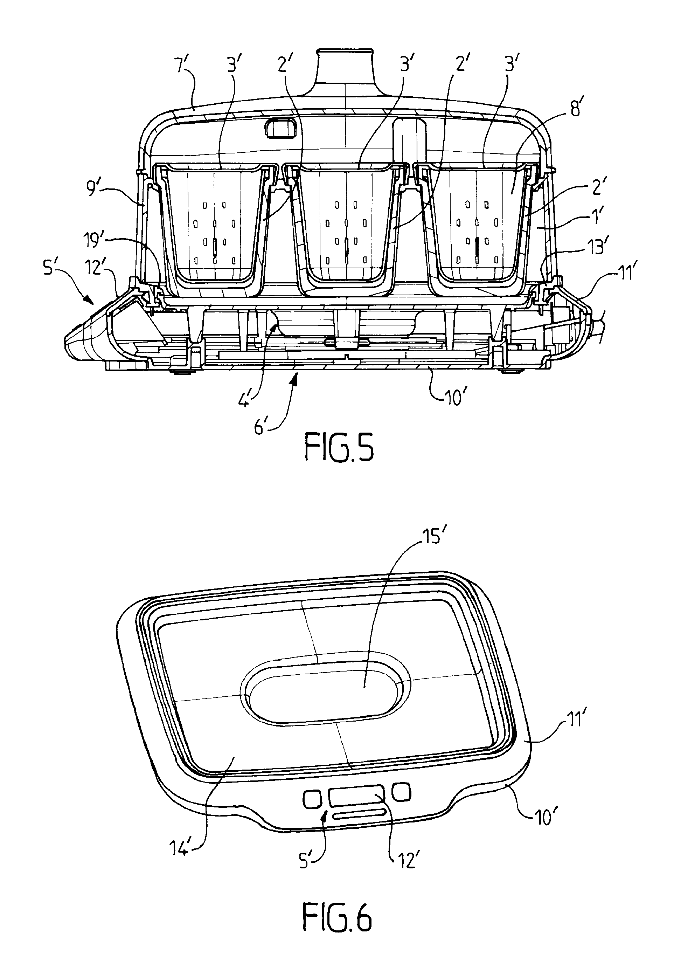

Un deuxième exemple de réalisation d'une yaourtière domestique électrique prévu pour la mise en oeuvre du procédé selon l'invention est illustré aux figures 5 à 7.

La figure 5 montre une yaourtière domestique électrique, comportant une enceinte 1' logeant au moins un récipient 2' prévu pour recevoir une préparation à base de lait et de ferments. L'enceinte 1' comporte une base chauffante 6' surmontée d'un couvercle principal 7'. L'enceinte 1' comporte des moyens de chauffe 4' associés à l'enceinte 1', ainsi que des moyens de pilotage 5' aptes à contrôler les moyens de chauffe 4'. Les moyens de chauffe 4' et les moyens de pilotage 5' sont agencés dans la base chauffante 6'. L'enceinte 1' est prévue pour loger douze récipients 2'. Les récipients 2' sont avantageusement réalisés en verre. Les récipients 2' peuvent être équipés de couvercles 3'. De même, les récipients 2' peuvent comprendre un réceptacle interne perforé 8' pour la préparation de fromage blanc ou de faisselle.

La yaourtière domestique électrique illustrée sur la figure 5 diffère de la yaourtière domestique électrique illustrée sur la figure 1 en ce que l'enceinte 1' comporte un support 9' de récipient 2' intercalé entre la base chauffante 6' et le couvercle principal 7'. Le couvercle principal 7' repose sur le support 9'. Les récipients 2' sont suspendus au dessus et à distance de la base chauffante 6'. A cet effet le support 9' comprend un plateau muni d'ouvertures permettant de positionner les récipients 2' dans l'appareil à distance de la base chauffante 6'. Les récipients 2' sont chauffés par rayonnement, ce qui permet d'envisager des puissances de chauffe plus élevées.

Tel que représenté sur les figures 5 et 6, la base chauffante 6' comporte une embase 10', un capot annulaire externe 11' logeant un panneau de commande 12', et un capot annulaire interne 13' entourant une plaque de chauffe 14'. Un joint 19' est interposé entre le capot annulaire interne 13' et la plaque de chauffe 14'. La base chauffante 6' forme ainsi une sole chauffante. Tel que mieux visible sur la figure 6, la plaque de chauffe 14' présente une conformation concave 15' centrale. Le couvercle principal 7' repose sur un bord supérieur de la base chauffante 6' à distance de la plaque de chauffe 14'.

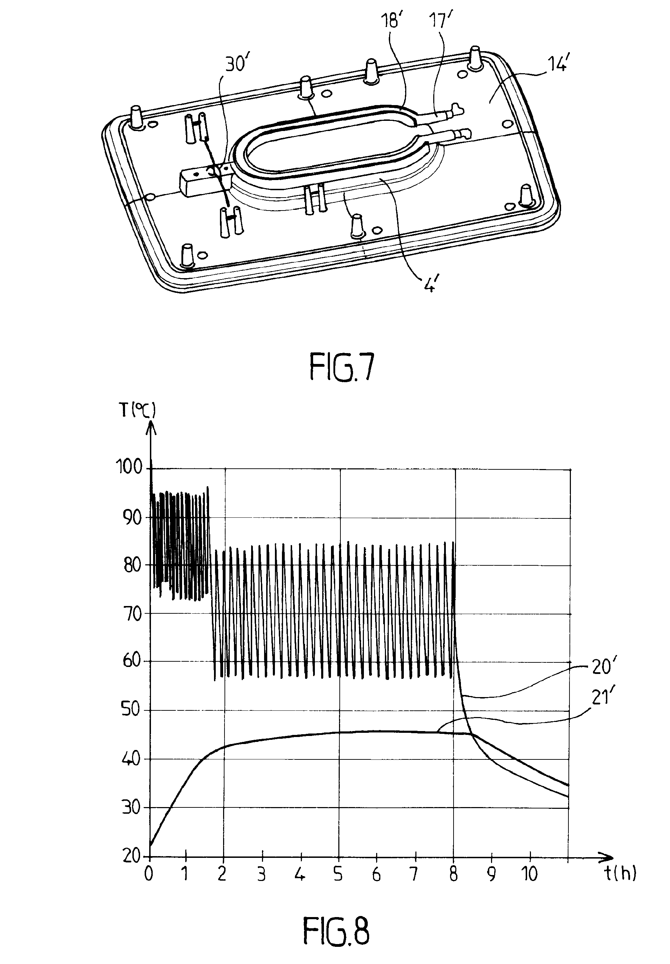

Tel que visible sur la figure 7, les moyens de chauffe 4' sont formés par un élément chauffant blindé 17' monté dans un logement 18' issu de la face inférieure de la plaque de chauffe 14'. L'élément chauffant blindé 17' est monté sous la conformation concave centrale 15'. La plaque de chauffe 14' est par exemple réalisée en aluminium pour assurer une répartition homogène de la température sur toute la surface de la plaque de chauffe 14' et de préférence en aluminium moulé permettant d'obtenir un bon rayonnement pour chauffer les récipients 2'. La base chauffante 6' comprend ainsi des moyens de chauffage surfacique placés sous les récipients 2', permettant de réaliser une chauffe homogène sous les récipients 2'.

Les moyens de pilotage 5' autorisent une alimentation des moyens de chauffe 4' s'étendant sur une durée d'au moins 4 heures. Les moyens de chauffe 4' ne sont pas nécessairement alimentés de manière continue. Les moyens de pilotage 5' comportent un dispositif de commande associé à un relais prévu pour piloter l'alimentation des moyens de chauffe 4'. La durée de fonctionnement est par exemple de 8 heures.

Le dispositif de commande est associé à un dispositif de régulation thermostatique régulant l'alimentation électrique des moyens de chauffe 4' pour maintenir une température dans l'enceinte 1'. Le dispositif de régulation thermostatique comporte par exemple un capteur 30' de type CTN monté contre la plaque de chauffe 14'. En d'autres termes, le capteur 30' permet de réaliser des mesures de température utilisées pour le pilotage des moyens de chauffe 4'.

Dans une phase initiale de fonctionnement, le relais alimente les moyens de chauffe pendant une durée déterminée, par exemple 3 minutes, de manière à obtenir dans l'enceinte 1' une température proche de la température souhaitée, puis de manière séquentielle, en utilisant une température de consigne initiale par exemple de l'ordre de 70°C. Après chaque interruption d'alimentation des moyens de chauffe 4', l'alimentation des moyens de chauffe 4' est réactivée lorsque la température détectée par le capteur 30' passe en dessous de la température de consigne. La mesure de température est ainsi associée à une température de consigne basse. La durée de la phase initiale de fonctionnement est par exemple de 1 h30.

Dans une phase ultérieure de fonctionnement, le relais alimente les moyens de chauffe de manière séquentielle en utilisant une température de consigne ultérieure plus basse, par exemple de l'ordre de 60°C. Ainsi l'apport thermique est piloté par plusieurs mesures de température et la phase initiale présente une température de consigne initiale supérieure à une température de consigne ultérieure de la phase ultérieure. Les mesures de température sont associées à des températures de consigne basse.

La puissance des moyens de chauffe 4' peut ainsi être beaucoup plus importante, par exemple 300W. La figure 8 montre la température de la plaque de chauffe 14' sur la courbe 20' et la température dans la préparation sur la courbe 21'. La puissance moyenne délivrée par les moyens de chauffe 4' lors de la phase initiale de fonctionnement est plus élevée que lors de la phase ultérieure de fonctionnement. La figure 8 montre que l'alimentation intermittente des moyens de chauffe 4' présente des intervalles de l'ordre de 5 minutes dans la phase initiale de fonctionnement et de l'ordre de 10 minutes dans la phase ultérieure de fonctionnement.

Toutefois, l'apport thermique des moyens de chauffe 4' contrôlés par les moyens de pilotage 5' autorise également une vitesse d'élévation de température de ladite préparation autour de 40°C qui soit comprise entre 5 et 20°C/h, et de préférence entre 7 et 15°C/h.

Tel que représenté sur la figure 8, la vitesse d'élévation de température de la préparation autour de 40°C est de l'ordre de 12°C/h. La discontinuité de la courbe 21' est moins perceptible mais peut être située aux environs de 1 h30.

De manière surprenante, il a été observé que les yaourts ainsi obtenus étaient encore plus fermes que les yaourts obtenus dans l'appareil selon le premier exemple de réalisation.

L'appareil selon le deuxième exemple de réalisation s'utilise et fonctionne de la manière suivante. L'utilisateur soulève le couvercle principal 7', dispose dans les ouvertures du support 9' disposé sur la base chauffante 6' un ou plusieurs récipients 2' contenant une préparation à base de lait et de ferments, remet en place le couvercle principal 7' sur le support 9', et actionne les moyens de pilotage 5' pour mettre en fonctionnement les moyens de chauffe 4'.

L'invention concerne également un procédé d'obtention de yaourt consistant à placer dans l'enceinte 1 ; 1' au moins un récipient 2 ; 2' contenant une préparation à base de lait et de ferments, à élever la température de la préparation au-dessus de 40°C par un apport thermique s'étendant sur une durée d'au moins 4 heures, la vitesse d'élévation de température de la préparation autour de 40°C étant comprise entre 5 et 20°C/h, et de préférence entre 7 et 15°C/h. Ainsi le procédé selon l'invention consiste à élever la température de la préparation au dessus de 40°C par un apport thermique, avec une vitesse d'élévation de température de la préparation autour de 40°C qui est comprise entre 5 et 20°C/h, et de préférence entre 7 et 15°C/h, ledit apport thermique élevant la température de la préparation au dessus de 40°C s'étendant sur une durée d'au moins 4 heures.

Dans le procédé mis en oeuvre dans l'appareil selon le premier exemple de réalisation ou selon le deuxième exemple de réalisation, l'apport thermique comporte au moins une phase initiale et une phase ultérieure, l'apport thermique étant plus important lors de la phase initiale que lors de la phase ultérieure. Les moyens de chauffe 4 ; 4' utilisés pour la phase initiale de l'apport thermique sont utilisés aussi pour la phase ultérieure de l'apport thermique. La puissance moyenne délivrée par les moyens de chauffe 4 ; 4' est plus importante lors de la phase initiale de fonctionnement que lors de la phase ultérieure de fonctionnement. Le procédé mis en oeuvre dans cet appareil consiste de plus à réaliser la phase initiale de l'apport thermique au moins jusqu'à l'atteinte d'une température de la préparation de 40°C. La phase ultérieure de l'apport thermique utilise des apports d'énergie séquentiels. En d'autres termes, les moyens de chauffe 4 ; 4' selon le premier exemple de réalisation ou selon le deuxième exemple de réalisation sont alimentés de manière intermittente dans la phase ultérieure de fonctionnement. Les moyens de pilotage 5 ; 5' sont aptes à la mise en oeuvre du procédé précité.

Ainsi, tel que bien visible sur les figures 4 et 8, la température de la préparation est élevée au dessus de 40°C par un apport thermique s'étendant sur une durée d'au moins 4 heures. Les moyens de chauffe 4 ; 4' contrôlés par les moyens de pilotage 5 ; 5' sont aptes à élever la température de la préparation disposée dans les récipients 2 ; 2' au dessus de 40°C pendant au moins 4 heures.

Tel que mentionné précédemment, l'appareil selon le premier exemple de réalisation présente une durée de fonctionnement de 8 heures. Tel que bien visible sur la figure 4, la température de la préparation représentée par la courbe 21 croit tout au long de la durée de fonctionnement.

Tel que mentionné précédemment, l'appareil selon le deuxième exemple de réalisation présente une durée de fonctionnement de 8 heures. Tel que bien visible sur la figure 8, la température de la préparation représentée par la courbe 21' croit pendant 6 heures environ puis décroit légèrement jusqu'à l'arrêt de l'alimentation des moyens de chauffe 4'.

Dans le procédé mis en oeuvre dans l'appareil selon le premier exemple de réalisation, l'apport thermique est piloté par un relais, sans utilisation de mesure de température, ce qui permet d'obtenir un appareil présentant une construction particulièrement simple.

Dans le procédé mis en oeuvre dans l'appareil selon le deuxième exemple de réalisation, l'apport thermique est piloté par au moins une mesure de température, ce qui permet à l'appareil d'être moins sensible aux conditions thermiques initiales d'ambiance et de température de la préparation introduite dans les récipients.

A titre de variante, la base chauffante 6 ; 6' pourrait comprendre des moyens de chauffage surfacique autres que la plaque de chauffe 14 ; 14' et l'élément chauffant 17 ; 17', par exemple un autocollant chauffant fixé sous une plaque supérieure de la base chauffante 6 ; 6', ou encore un élément chauffant sérigraphié sous une plaque supérieure de la base chauffante 6 ; 6'.

Les récipients 2 ; 2' sont prévus pour la réalisation de yaourts en portions séparées. La capacité utile des récipients 2 ; 2', correspondant au volume de préparation susceptible d'être contenu dans les récipients 2 ; 2', est par exemple comprise entre 60 et 200 ml. L'invention n'est toutefois pas limitée à la réalisation de yaourts en portions individuelles et concerne aussi des yaourtières domestiques électriques comportant un ou plusieurs récipients de capacité utile plus importante.

A titre de variante, les yaourtières domestiques électriques selon l'invention peuvent comporter au moins un récipient 2 ; 2' logé dans l'enceinte 1 ; 1'.

La présente invention n'est nullement limitée aux exemples de réalisation décrits et à leurs variantes, mais englobe de nombreuses modifications dans le cadre des revendications.

## Revendications

1. Procédé d'obtention de yaourt, consistant à placer dans une enceinte (1 ; 1') au moins un récipient (2 ; 2') contenant une préparation à base de lait et de ferments, à élever la température de la préparation au-dessus de 40°C par un apport thermique s'étendant sur une durée d'au moins 4 heures, **caractérisé en ce que** la vitesse d'élévation de température de la préparation autour de 40°C est comprise entre 5 et 20°C/h, et de préférence entre 7 et 15°C/h.

2. Procédé d'obtention de yaourt selon la revendication 1, **caractérisé en ce que** l'apport thermique comporte au moins une phase initiale et une phase ultérieure et **en ce que** l'apport thermique est plus important lors de la phase initiale que lors de la phase ultérieure.

3. Procédé d'obtention de yaourt selon la revendication 2, **caractérisé en ce qu'**il consiste à réaliser la phase initiale de l'apport thermique au moins jusqu'à l'atteinte d'une température de la préparation de 40°C.

4. Procédé d'obtention de yaourt selon l'une des revendications 2 ou 3, **caractérisé en ce que** la phase ultérieure de l'apport thermique utilise des apports d'énergie séquentiels.

5. Procédé d'obtention de yaourt selon l'une des revendications 1 à 4, **caractérisé en ce que** l'apport thermique est piloté par au moins une mesure de température.

6. Procédé d'obtention de yaourt selon l'une des revendications 2 à 4, **caractérisé en ce que** l'apport thermique est piloté par plusieurs mesures de température et **en ce que** la phase initiale présente une température de consigne initiale supérieure à une température de consigne ultérieure de la phase ultérieure.

7. Yaourtière domestique électrique, comportant une enceinte (1 ; 1') logeant au moins un récipient (2 ; 2') prévu pour recevoir une préparation à base de lait et de ferments, des moyens de chauffe (4 ; 4') associés à l'enceinte (1 ; 1'), ainsi que des moyens de pilotage (5 ; 5') aptes à contrôler les moyens de chauffe (4 ; 4'), les moyens de chauffe (4 ; 4') étant aptes à porter la température de ladite préparation disposée dans ledit récipient (2 ; 2') au dessus de 40°C, les moyens de pilotage (5 ; 5') autorisant une alimentation des moyens de chauffe (4 ; 4') s'étendant sur une durée d'au moins 4 heures, **caractérisée en ce que** l'apport thermique des moyens de chauffe (4 ; 4') contrôlés par les moyens de pilotage (5; 5') autorise une vitesse d'élévation de température de ladite préparation autour de 40°C qui soit comprise entre 5 et 20°C/h, et de préférence entre 7 et 15°C/h.

8. Yaourtière domestique électrique selon la revendication 7, **caractérisée en ce que** l'enceinte (1 ; 1') comporte une base chauffante (6 ; 6') surmontée d'un couvercle principal (7 ; 7').

9. Yaourtière domestique électrique selon la revendication 8, **caractérisée en ce que** ledit récipient (2) repose sur la base chauffante (6).

10. Yaourtière domestique électrique selon la revendication 9, **caractérisée en ce que** ledit récipient (2) repose dans une conformation concave (15) de la base chauffante (6).

11. Yaourtière domestique électrique selon la revendication 8, **caractérisée en ce que** ledit récipient (2') est suspendu au dessus et à distance de la base chauffante (6').

12. Yaourtière domestique électrique selon la revendication 11, **caractérisée en ce que** l'enceinte (1') comporte un support (9') de récipient (2') intercalé entre la base chauffante (6') et le couvercle principal (7').

13. Yaourtière domestique électrique selon l'une des revendications 7 à 12, **caractérisée en ce que** ledit récipient (2 ; 2') est réalisé en verre.

14. Yaourtière domestique électrique selon l'une des revendications 7 à 13, **caractérisée en ce qu'**elle comporte plusieurs récipients (2 ; 2') agencés dans l'enceinte (1 ; 1').

15. Yaourtière domestique électrique selon l'une des revendications 7 à 14, **caractérisée en ce que** les moyens de chauffe (4 ; 4') contrôlés par les moyens de pilotage (5 ; 5') sont aptes à élever la température de la préparation au dessus de 40°C pendant une durée d'au moins 4 heures.

16. Yaourtière domestique électrique selon l'une des revendications 7 à 15, **caractérisée en ce que** les moyens de pilotage (5 ; 5') comportent un dispositif de commande associé à un relais prévu pour piloter l'alimentation des moyens de chauffe (4 ; 4').

17. Yaourtière domestique électrique selon l'une des revendications 7 à 16, **caractérisée en ce que** les moyens de pilotage (5 ; 5') sont aptes à la mise en oeuvre du procédé selon l'une des revendications 1 à 6.

18. Yaourtière domestique électrique selon la revendication 17, dans laquelle les moyens de pilotage (5 ; 5') sont aptes à la mise en oeuvre du procédé selon la revendication 4, **caractérisée en ce que** les moyens de chauffe (4 ; 4') utilisés pour la phase initiale de l'apport thermique sont utilisés aussi pour la phase ultérieure de l'apport thermique.
